# EUROPEAN PATENT APPLICATION

(11) **EP 2 172 284 A1**
(43) Date of publication of application: **07.04.2010**
(21) Application number: 08790315.9
(22) Date of filing: 31.07.2008
(51) Int. Cl.: B21D 22/28, B21D 28/06, B21D 51/26, H01M 2/02

(54) **BLANK FOR METALLIC CAN, AND METHOD FOR MANUFACTURING THE METALLIC CAN**

(30) Priority: 03.08.2007 JP 2007203429
(71) Applicant: Panasonic Corporation, Kadoma-shi Osaka 571-8501 (JP)
(72) Inventor: GODA, Yoshio, Osaka-shi 540-6270 (JP); KATO, Seiichi, Osaka-shi, 540-6270 (JP)
(74) Representative: TBK-Patent
(86) International application number: PCT/JP2008/002051
(87) International publication number: WO 2009/019832

(57) **Abstract**

A metal can blank having a shape surrounded by n external tangents, n partial arcs or partial lines, and 2n linear or arc-shaped connect lines is used to produce a metal can. Each external tangent is a line shorter than one side of a regular n-gon circumscribed about a circle, with the midpoint being a point of contact between each of the n sides of the regular n-gon and the circle. Each partial arc is a part of the circle positioned between the adjacent external tangents in the circumferential direction of the circle. Each partial line is a line connecting both ends of the partial arc. Each connect line is a line connecting one end of the external tangent with the most adjacent end of the partial arc or partial line. The material yields, productivity, etc. of such metal cans are significantly improved, and high quality metal cans can be obtained.

## Description

### Technical Field

The invention relates to a blank for a metal can and a method for producing metal cans. More particularly, the invention mainly relates to an improvement in a blank for a metal can.

### Background Art

Cylindrical metal cans with bottoms (hereinafter simply referred to as "metal cans") have been widely used, for example, in the fields of food, beverages, quasi-drug, transport devices, and batteries, and there is an increasing demand for metal cans. With respect to the production of metal cans, various methods have been proposed depending on the material, structure, use, etc. of metal cans.

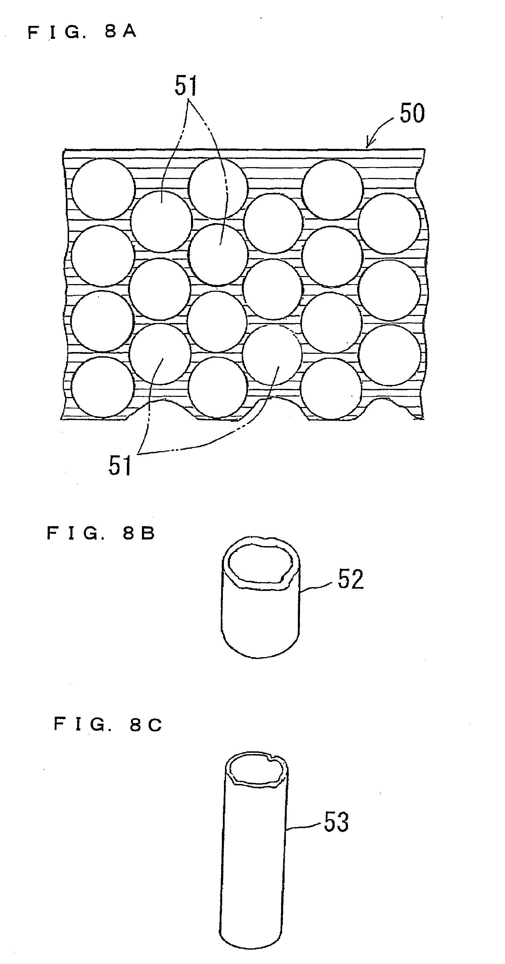

FIGs. 8A to FIG. 8C are drawings showing a method for producing battery cans, which are representative metal cans. FIG. 8A is a plan view showing a blanking step of punching out circular blanks 51 (hereinafter "blanks 51") from a hoop material 50. In FIG. 8A, the loss material left after the blanks 51 have been punched out from the hoop material 50 is illustrated as hatching of parallel lines for convenience sake. FIG. 8B is a perspective view showing a drawing step for obtaining a cylindrical intermediate cup-shaped product 52 with a bottom. FIG. 8C is a perspective view showing a DI (Drawing and Ironing) step for obtaining a battery can 53. This production method includes the step illustrated in FIG. 8A, the step illustrated in FIG. 8B, the step illustrated in FIG. 8C, and a finishing step.

In the step of FIG. 8A, the hoop material 50 is punched into circular shapes to obtain the blanks 51. The hoop material 50 is, for example, a nickel-plated steel plate that is shaped like a long belt. From each of the blanks 51, the battery can 53 is produced. In the step of FIG. 8B, the blank 51 is drawn to obtain the intermediate cup-shaped product 52. In the step of FIG. 8C, the intermediate cup-shaped product 52 is subjected to a DI process to obtain the battery can 53. That is, DI process is a process in which a drawing operation and an ironing operation are performed continuously and simultaneously. In the finishing step, the open edge of the battery can 53 is trimmed to make the open edge flat and adjust the dimensions in the longitudinal direction, thereby obtaining a finished product of the battery can 53.

According to this production method, the circular blank 51 is transformed into a similar shape, i.e., transformed into the intermediate cup-shaped product 52 and the battery can 53 which are also circular in cross-sectional shape. There is thus an advantage in that the open edge of the battery can 53 obtained by the DI process of the intermediate cup-shaped product 52 has only a small amount of wavy distortion due to the process, which is to be cut in the finishing step. However, there is a problem in that the step illustrated in FIG. 8A leaves a relatively large amount of loss material.

That is, when the blanks 51 are punched out from the hoop material 50, the hoop material 50 needs to be held somewhere so that it does not become displaced. Thus, when the blanks 51 are arranged so as to be in contact with one another, they cannot be punched out. Hence, as illustrated in FIG. 8A, the blanks 51 to be punched out are staggered so that they are spaced apart from one another. However, in such an arrangement, even if the adjacent blanks 51 are arranged so as to be as close to one another as possible, a relatively large amount of loss material is left, as illustrated in FIG. 8A. As a result, the yield of the produced battery cans 53 relative to the amount of the hoop material 50 used becomes significantly low.

Also, regular hexagonal blanks have also been used (for example, see Patent Document 1). In the case of a regular hexagonal blank, the perimeter of the blank is composed of six sides (straight lines) of the same length. Thus, when regular hexagonal blanks are punched out, they can be arranged so that one blank is adjacent to six other blanks, with adjacent two blanks sharing one side. By cutting the six sides of each blank in two stages, it is possible to secure an area to be held during the cutting. Blanks can thus be produced only by the cutting step. In this case, no loss material is left between the blanks except for a slight amount of triangular loss material left at both ends of the hoop material in the width direction thereof.

However, when a regular hexagonal blank is subjected to a drawing process and a DI process, the open edge of the resultant battery can becomes distorted relatively largely due to the process at the positions corresponding to the six vertices of the hexagon. The wavy distortion due to the process is cut as loss material in the finishing step, but the cut amount becomes relatively large. It is therefore not possible to sufficiently enhance the yield of the produced battery cans 53 relative to the amount of the hoop material 50 used, compared with the use of circular blanks. That is, no matter which of circular blanks and regular hexagonal blanks is used, there is little difference in the overall amount of loss material in all the steps, although the step that leaves a large amount of loss material is different.

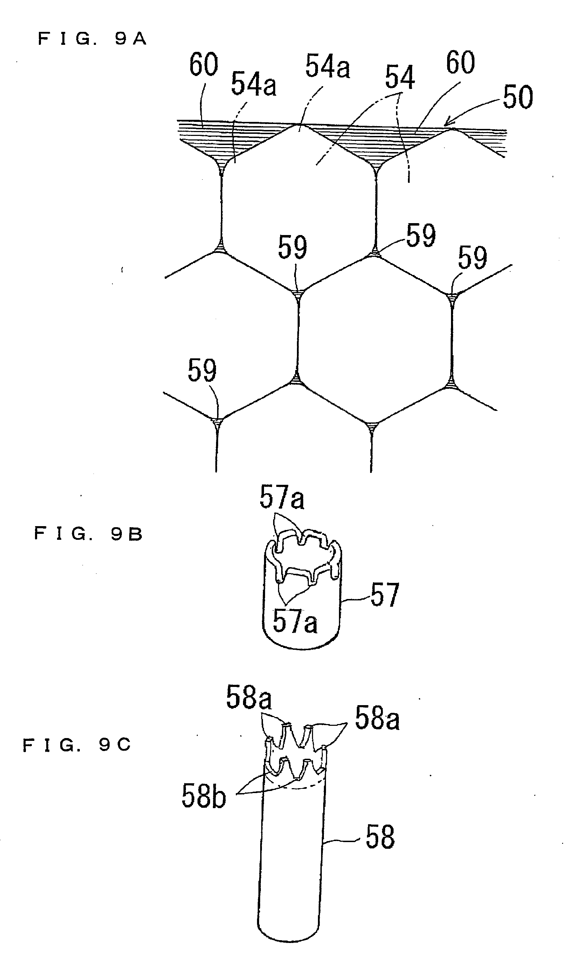

To solve such problems associated with conventional techniques, a different type of method for producing battery cans has been proposed. FIG. 9A to FIG. 9C are drawings showing a different type of method for producing battery cans (for example, see Patent Document 2). FIG. 9A is a plan view showing a blanking step of punching out almost regular hexagonal blanks 54 (hereinafter "blanks 54") from a hoop material 50. FIG. 9B is a perspective view showing a drawing step for obtaining a cylindrical intermediate cup-shaped product 57 with a bottom. FIG. 9C is a perspective view showing a DI step for obtaining a battery can 58.

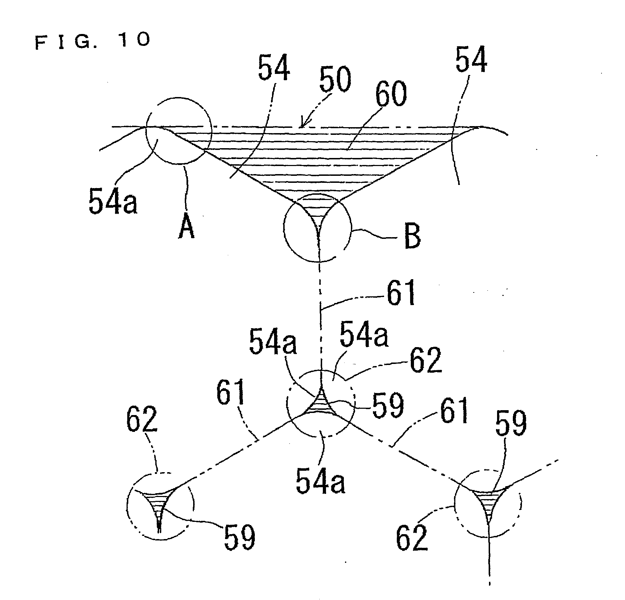

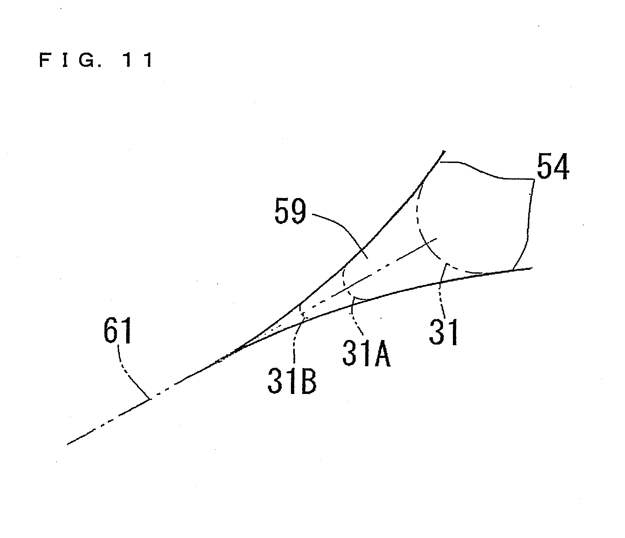

FIG. 10 is an enlarged plan view of the main part of FIG. 9A. FIG. 11 is an enlarged plan view of a part of an inter-blank loss part 59. In FIGs. 9A to 11, the loss material left after the blanks 54 have been punched out from the hoop material 50 is illustrated as hatching of horizontal parallel lines for convenience sake.
This production method includes the step illustrated in FIG. 9A, the step illustrated in FIG. 9B, the step illustrated in FIG. 9C, and a finishing step.

In the step of FIG. 9A, the hoop material 50 is punched into circular shapes to obtain the blanks 54. Each of the blanks 54 is in the shape of a regular hexagon having six arc-shaped vertices 54a between the sides of the regular hexagon. In the step of FIG. 9B, the blank 54 is drawn to obtain an intermediate cup-shaped product 57. At the open edge of the intermediate cup-shaped product 57, the vertices 54a of the blank 54 become deformed due to the stress of the drawing process, thereby resulting in the formation of protrusions extending in the longitudinal direction of the intermediate cup-shaped product 57. Also, formed between the adjacent protrusions are depressed parts 57b.

In the step of FIG. 9C, the intermediate cup-shaped product 57 is drawn and ironed to obtain a battery can 58. The size of the battery can 58 becomes slightly smaller than that of the drawn and ironed battery can produced by using a regular hexagonal blank. Also, at the open edge of the battery can 58, the wavy process distortion of the intermediate cup-shaped product 57 becomes more severe due to the stress of the drawing and ironing process. As a result, relatively large wavy protrusions 58a are formed as process distortion. At the same time, depressed parts 58b deeper than the depressed parts 57b are formed between the adjacent protrusions 58a. The depressed parts 58b are susceptible to cracking. It is thought that these protrusions 58a and depressed parts 58b are formed because the blank 54 is basically in the shape of a regular hexagon although it has the six arc-shaped vertices 54a.

In the finishing step, the protrusions 58a and the depressed parts 58b on the open edge are cut. In consideration of cracking of the depressed parts 58b, there is a need to cut the open edge slightly more than necessary. For example, it is desirable to cut along the cutting line shown by the two-dot chain line in FIG. 9C. If the cracks of the depressed parts 58b are not fully cut away, the opening of the battery can after the finishing step may become cracked, thereby resulting in a high product defective rate. Cutting along the cutting line shown by the two-dot chain line increases the amount of loss material. Therefore, the production method of Patent Document 2 fails to sufficiently enhance the yield of the produced battery cans 58 relative to the amount of the hoop material 50 used.

Also, the use of the blank 54 having such a shape causes various problems in the production process. For example, when the shaping of the intermediate cup-shaped product 57 is performed by a transfer process, the six protrusions 58a formed on the open edge may interfere with the detachment of the intermediate cup-shaped product 57 from the punch by the stripping tool. Also, when the intermediate cup-shaped product 57 is transported to the next step, the protrusions 58a may hit and damage the transport equipment. Also, in the next DI step, the protrusions 58a may come into contact with the drawing tool, thereby leading to misoperation. As a result, mass production becomes difficult.

The protrusions 58a formed on the open edge of the battery can 58 in the step of FIG. 9C tend to have unequal lengths since the material ductility is not sufficiently even. Thus, when the produced battery can 58 is detached from the punch, the distal ends of the unequal-length protrusions 58a unevenly come into contact with the stripper, so that the battery can 58 cannot be detached properly. Even if the battery can 58 can be detached, part of the battery can 58 may become damaged. Also, at least a part of the protrusions 58a may become broken, and the broken pieces may remain in the die, thereby damaging the battery can 58 that will be subsequently subjected to this process.

Also, Patent Document 2 fails to provide detailed description and illustration of dies and equipment for punching out blanks except for the following brief statement: "Punches and dies are prepared to punch out blanks that are basically in the shape of a regular hexagon with arc-shaped rounded corners. The punches having a punching section and dies are disposed in a punching press so that the adjacent blanks are arranged at equal intervals and at equal margins at both ends of a long rolled steel plate (hoop material) in the width direction thereof. At this time, the punches and dies are staggered in the same number in the width direction of the plate, and in two parallel rows in the longitudinal direction. The long rolled steel plate is punched while being continuously fed to the punching press".

It is assumed from this statement that the technique of Patent Document 2 employs a punching means including punches and dies for punching out blanks at one time. When such a punching means is employed, a plurality of blanks need to be arranged with a space, called "feeding bridge", provided between a blank and adjacent two blanks. This arrangement is similar to that of the blanks 51 illustrated in FIG. 8A, and a large amount of loss material is thus left after the blanks 51 have been punched out. This can also become an obstacle to enhancing the yield of the produced battery cans relative to the amount of the hoop material used.

Meanwhile, there has been proposed a battery can that is produced using a steel plate with an aluminum layer formed on the surface (for example, see Patent Document 3). Patent Document 3 states that the use of this steel plate significantly enhances the service life of the ironing tool in the battery can production process. However, it is silent as to any technique to enhance the yield of the produced battery cans relative to the amount of the steel plate used.
Patent Document 1 : Japanese Laid-Open Patent Publication No. 2003-263974
Patent Document 2 : Japanese Laid-Open Patent Publication No. Hei 11-309517
Patent Document 3 : Japanese Laid-Open Patent Publication No. 2001-313008

### Disclosure of the Invention

### Problem To be Solved by the Invention

Further, based on FIG. 9A to FIG. 11, the shape of the blanks 54 is discussed with respect to the application of the punching step of the invention which will be described later. As illustrated in FIG. 9A, the arrangement of the blanks 54 in the hoop material 50 is similar to that of the regular hexagonal blanks. That is, one blank 54 is adjacent to six other blanks 54, and adjacent two blanks 54 share one side without feeding bridge therebetween. The one side shared by the adjacent two blanks 54 corresponds to a cutting line 61 shown by the two-dot chain line in FIG. 10.

Also, the triangular part surrounded by three adjacent vertices 54a is the inter-blank loss part 59. Also, at both ends of the hoop material 50 in the width direction, the triangular part surrounded by adjacent two blanks 54 and the side edge of the hoop material 50 in the width direction is a side-edge loss part 60.

To produce the blanks 54, first, predetermined areas of the hoop material 54 are punched out by using die tools 62 composed of a punch and a die having blades of the shape corresponding to the inter-blank loss part 59 and the side-edge loss part 60. The punched hoop material is then cut along the cutting lines 61 shared by the adjacent two blanks 54. Since one blank 54 has six cutting lines 61, performing this cutting in at least two stages ensures that there are some areas to be held during cutting. In this way, the individual blanks 54 are obtained.

However, in order to punch out the inter-blank loss part 59, the die tool 62 needs to have a triangular blade whose three vertices are pointed very sharply. When such a die tool 62 is used, the punch or the hoop material 50 comes off the punched position at the moment of punching. As a result, the sharp edge of the blade is susceptible to chipping or abrasion, which shortens the service life of the die tool 62. Also, since the punched parts tend to be left with jagged edges, mass production is difficult and the quality of the produced battery can deteriorates.

Also, in order to take as many blanks 54 as possible from one hoop material 50, as illustrated in FIG. 10, the blanks 54 are arranged so that the vertices 54a of the blanks 54 positioned at the end of the hoop material 50 in the width direction are aligned with the side edge of the hoop material. However, in such an arrangement, it is necessary to punch out the side-edge loss part 60 that is in the shape of a substantially isosceles triangle having two vertices A and one vertex B. The vertex A is a part where the vertex 54a of the blank 54 contacts the side edge of the hoop material 50, and its angle is an acute angle of approximately 30° . Also, the vertex B is a part where the vertices 54a of the blanks 54 contact one another, and its shape is as sharp-pointed as one of the vertices of the inter-blank loss part 59.

In order to punch out the side-edge loss part 60 with the vertices A and B, the die tool 62 needs to have a sharp blade similar to the one necessary to punch out the inter-blank loss part 59. However, the use of such a die tool 62 causes problems similar to the ones associated with punching out the inter-blank loss part 59.

Also, after the inter-blank loss parts 59 and the side-edge loss parts 60 are punched out, cutting is made along the cutting lines 61. The cutting needs to be made so that the obtained blanks 54 have the same shape. To do this, as illustrated in FIG. 11, the end of the cutting line 61 must be accurately aligned with the tip of the sharp-pointed vertex of the inter-blank loss part 59. However, even if the movement of the hoop material 50 is controlled with very high accuracy, making no feeding error is almost impossible, and it is very difficult to cut so that the ends of the cutting line 61 are aligned with the tips of the vertices of the inter-blank loss parts 59. -

In actual operation, the punched hoop material is often thinly sliced, while being scraped, by the die tool along the cut section from which the inter-blank loss part 59 has been punched out, i.e., the same area of the hoop material is undesirable cut twice. If such cutting twice occurs, the die tool wears out severely and the life of the die tool is greatly shortened, which makes mass production difficult. In addition, the blank 54 obtained by cutting tends to be left with jagged edges. Also, metal pieces produced by cutting twice tend to adhere to the blank 54. When these blanks 54 are used to make cans, the resulting battery cans have flaws, scratch marks, deformation, etc. As a result, the quality of the produced battery cans deteriorates.

It is therefore an object of the invention to provide blanks for metal cans capable of easy mass production, wherein more blanks can be taken from a hoop material of the same area with less loss material than conventional blanks without shortening the tool life, and almost no jagged edges are left on the cut section or almost no metal pieces are produced in the cutting and other steps.
It is another object of the invention to provide a method for producing metal cans by using the metal can blanks of the invention.

### Means for Solving the Problem

The invention provides a blank for a metal can. The blank has a shape that is surrounded by:
n external tangents to a circle about which a regular n-gon is circumscribed, the midpoint of each of the n external tangents being a point of contact between each of the n sides of the regular n-gon and the circle, each of the n external tangents shorter than one side of the regular n-gon;
at least one selected from: n partial arcs of the circle each positioned between the adjacent external tangents in the circumferential direction of the circle; and n partial lines each connecting both ends of each of the partial arcs; and
2n linear or arc-shaped connect lines each connecting an end of each of the external tangents with the most adjacent end of each of the partial arcs or partial lines.

Preferably, the n external tangents have the same length, the n partial arcs or partial lines have the same length, and the 2n connect lines have the same length.
In one embodiment of the invention, the length of the external tangents is preferably equal to the length of the partial arcs or partial lines or shorter than the length of the partial arcs or partial lines.
In another embodiment of the invention, the length of each of the external tangents is preferably 16% to 60% of the length of one side of the regular n-gon.

Preferably, each of the partial arcs or partial lines has, at its midpoint, an outwardly projecting part.
The projecting part is preferably triangular, quadrangular, trapezoidal, semicircular, or sectoral.
The regular n-gon is preferably a regular hexagon or regular octagon.
The metal can is preferably a battery can.

The invention also provides a method for producing metal cans, including:
a blanking step of punching and cutting a hoop material to obtain the metal can blanks of the invention;
a first drawing step of drawing each of the metal can blanks to obtain a cylindrical intermediate cup-shaped product with a bottom;
a second drawing step of drawing the intermediate cup-shaped product to obtain a cylindrical metal can with a bottom; and
a finishing step of trimming an open edge of the metal can to obtain a finished product of the metal can with a flat open end face.

The blanking step preferably includes:
a blank positioning step of setting imaginary lines for staggering the metal can blanks of the invention on a surface of the hoop material in such a manner that the adjacent metal can blanks share one of the external tangents;
a loss part punching step including a step of punching inter-blank loss parts and a step of punching side-edge loss parts to form punched holes and openings in the hoop material; and
a cutting step of cutting the hoop material between the opposing vertices of the adjacent punched holes and between the opposing vertices of the punched holes and the openings along the imaginary lines of the external tangents.

The blank positioning step is preferably a step of setting the imaginary lines for arranging the metal can blanks in a zigzag in such a manner that in each of the metal can blanks arranged at the ends of the hoop material in the width direction thereof, the external tangent facing the external tangent that forms the inter-blank loss part is positioned near the side edge of the hoop material in the width direction thereof.

The step of punching inter-blank loss parts is preferably a step of punching inter-blank loss parts to form punched holes in the hoop material, each of the inter-blank loss parts being surrounded by the imaginary lines of three partial arcs of three adjacent metal can blanks each facing the other two metal can blanks and the imaginary lines of six connect lines connecting the imaginary lines of the three partial arcs.

The step of punching side-edge loss parts is preferably a step of punching side-edge loss parts to form openings in the hoop material, each of the side-edge loss parts being surrounded by the imaginary lines of two metal can blanks adjacent at the ends of the hoop material in the width direction thereof and the side edge of the hoop material in the width direction thereof.
The metal cans are preferably battery cans.

### Effect of the Invention

The blank for a metal can of the invention has a particular shape, which is a basically circular shape composed of n external tangents, n partial arcs, and 2n connect lines connecting these. When such metal can blanks are imaginarily staggered on the surface of a hoop material, the amount of loss material cut from the hoop material by punching decreases significantly. Also, when this blank is formed into an intermediate cup-shaped product and a battery can, the amount of cut loss material decreases since relatively small protrusions grow on the open edge thereof. This allows a significant improvement in the yield of produced metal cans (product yield) relative to the amount of the hoop material used.

Also, since the vertices of the loss material are not pointed sharply, the tool life is not shortened. Also, in the cutting and other steps, jagged edges are not left on the cut section and no metal pieces are produced. Further, since the protrusions having grown on the open edge of the intermediate cup-shaped product and metal can have an almost uniform length, no problem occurs in such steps as detachment from the machine and transportation. At this time, the protrusions do not become bent, broken, cracked, or the like, so that metal pieces, metal powders, or the like do not attach to the intermediate cup-shaped product and metal can. Hence, the ratio of damage of finally obtained metal cans lowers significantly, so that high quality battery cans can be produced with high yields and high productivity.

Also, in the production method of metal cans of the invention, the blanking step and the finishing step leave loss material. In the blanking step, inter-blank loss parts and side-edge loss parts are left as loss material, but their amounts are minimized. Also, in the finishing step, protrusions extending from the open edge of the metal can in the longitudinal direction thereof are left as loss material. Although the number of these protrusions is greater than conventional one, their length is significantly shorter than that of conventional protrusions, and the depressed parts between the protrusions are almost free from cracks. Thus, by merely cutting the protrusions and the vicinity thereof, high quality metal cans can be obtained, and the amount of loss material can be reduced. This permits an improvement in material yield.

Also, by performing two steps of punching the inter-blank loss parts and the side-edge loss parts from the hoop material and cutting along the external tangents after the punching, the blanks can be punched out with high efficiency, and metal cans can be produced with high productivity. Also, the production method of the invention is applicable, but not particularly limited, to the production of cylindrical metal cans with bottoms for various applications. Such examples include battery cans and beverage cans. According to the production method of the invention, it is advantageously possible to produce high quality metal cans with high productivity while permitting a reduction in material costs.

### Brief Description of the Drawings

FIG. 1 is a plan view of a blank for a metal can in one embodiment of the invention.
FIG. 2 is a plan view showing a part of a process in a production method of metal cans in another embodiment of the invention.
FIG. 3A is a longitudinal sectional view schematically showing the structure of a first press and a step of positioning a blank set part 1V in a production process of an intermediate cup-shaped product.
FIG. 3B is a longitudinal sectional view schematically showing the structure of the first press and a step of punching a blank 1 in the production process of an intermediate cup-shaped product.
FIG. 3C is a longitudinal sectional view schematically showing the structure of the first press and a step of drawing the blank 1 in the production process of an intermediate cup-shaped product.
FIG. 4 is an enlarged plan view showing a part of the imaginary arrangement of blank set parts on a hoop material.
FIG. 5 is a perspective view showing the appearance of the intermediate cup-shaped product.
FIG. 6A is a longitudinal sectional view schematically showing the structure of a drawing and ironing machine used in the production method of metal cans in another embodiment of the invention.
FIG. 6B is a perspective view showing the appearance of a battery can obtained by a second drawing step in the production method of metal cans in another embodiment of the invention.
FIG. 7A is a plan view showing the shape of an inter-blank loss part in another mode.
FIG. 7B is a plan view showing the shape of an inter-blank loss part in another mode.
FIG. 7C is a plan view showing the shape of an inter-blank loss part in another mode.
FIG. 7D is a plan view showing the shape of an inter-blank loss part in another mode.
FIG. 7E is a plan view showing the shape of an inter-blank loss part in another mode.
FIG. 7F is a plan view showing the shape of an inter-blank loss part in another mode.
FIG. 7G is a plan view showing the shape of an inter-blank loss part in another mode.
FIG. 7H is a plan view showing the shape of an inter-blank loss part in another mode.
FIG. 7I is a plan view showing the shape of an inter-blank loss part in another mode.
FIG. 8A is a plan view showing a blanking step in a production method of battery cans.
FIG. 8B is a perspective view showing a drawing step in the production method of battery cans.
FIG. 8C is a perspective view showing a DI step in the production method of battery cans.
FIG. 9A is a plan view showing a blanking step in another production method of battery cans.
FIG. 9B is a perspective view showing a drawing step in another production method of battery cans.
FIG. 9C is a perspective view showing a DI step in another production method of battery cans.
FIG. 10 is an enlarged plan view showing the main part of FIG. 9A.
FIG. 11 is an enlarged plan view showing a part of the inter-blank loss part illustrated in FIG. 9A to FIG. 9C and FIG. 10.

### Best Mode for Carrying Out the Invention

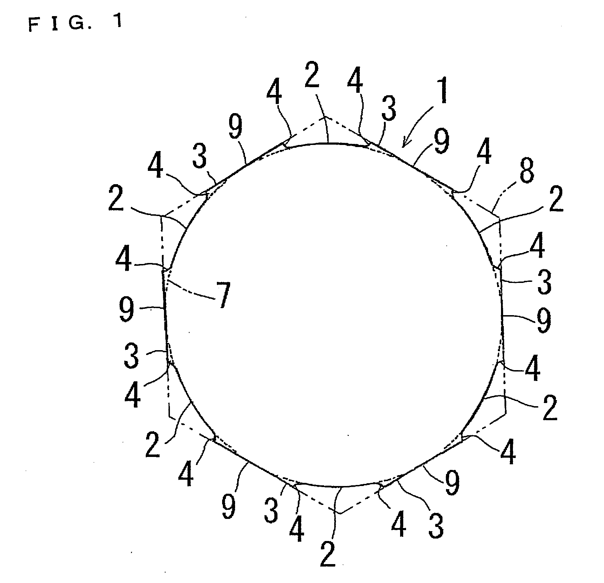

FIG. 1 is a plan view of a blank 1 for a metal can (hereinafter referred to as simply a "blank 1") in one embodiment of the invention. The blank 1 has a basically circular flat shape that is surrounded by six external tangents 3, six partial arcs 2, and twelve connect lines 4. The shape of the blank 1 is clearly different from that of the regular hexagonal blank 54 illustrated in FIG. 9A to FIG. 9C. The six external tangents 3 are spaced from the six partial arcs 2. More specifically, an end of an external tangent 3 is connected to the end of the partial arc 2 that is closest to the end of the external tangent 3 by a connect line 4. There are twelve such connections between the end of the external tangent 3 and the end of the partial arc 2 by the connect line 4.

When the blank 1 is drawn to obtain an intermediate cup-shaped product that is described later, these connected parts between the ends of the external tangents 3 and the ends of the partial arcs 2 by the connect lines 4 become twelve protrusions extending from the open edge of the intermediate cup-shaped product in the longitudinal direction thereof. These protrusions are short, and the number of these protrusions is twelve, which is twice six that is the number of protrusions formed when a regular hexagonal blank is used. That is, smaller protrusions than conventional ones are formed in greater number. Therefore, the influence by the uneven material ductility is reduced, and the lengths of the twelve protrusions become almost the same.

As a result, in a molding apparatus, the twelve protrusions evenly come into contact with the stripper, so the intermediate cup-shaped product or metal can can be smoothly detached without slanting. Also, since the protrusions do not become bent or partially or totally broken, the occurrence of flaws, scratch marks, deformation, etc. is significantly suppressed in the finally obtained battery can. Also, a can jam does not occur. Hence, the product yield improves and high quality metal cans can be obtained.

In FIG. 1, an imaginary regular hexagon 8 (hereinafter referred to as simply a "regular hexagon 8") shown by the chain double-dashed line is circumscribed about an imaginary circle 7 (hereinafter referred to as simply "circle 7") shown by the chain double-dashed line. The regular hexagon 8 has six sides, and each of the six sides has a point of contact 9 with the circle 7. That is, there are six points of contact 9 between the regular hexagon 8 and the circle 7. When a regular n-gon is circumscribed about the circle 7, there are n points of contact between the circle 7 and the regular n-gon.

Each of the external tangents 3 is a tangent to the circle 7. It is a straight line shorter than the length of one side of the regular hexagon 8, with the mid point being the point of contact 9. These external tangents 3 are spaced from one another and the number of the external tangents 3 is six. It is preferable that the six external tangents 3 have the same length. In this case, the imaginary arrangement of the blanks 1 on the surface of the hoop material 50 becomes easy. Also, since the shapes of the loss materials become almost the same, the loss materials can be easily punched out. When a regular n-gon is used instead of the regular hexagon 8, there are n external tangents.

It is also preferable that the length of the external tangent 3 be 16% to 60% of the length of one side of the regular hexagon 8. If it is less than 16%, the amount of loss material is large, and the service life of the die tool may become shortened due to cutting twice, blade chipping or abrasion in the punching step. Also, if it exceeds 60%, the shape of the blank 1 becomes almost hexagonal, which may cause problems associated with the formation of a regular hexagonal blank. Also, in the step of making a battery can, large wavy process distortion may appear, thereby damaging the molding machine or lowering the product yield. The length of the external tangent 3 is more preferably set in the range of 20 to 30% of the length of one side of the regular hexagon 8.

Each of the partial arcs 2 is a part of the circle 7 positioned between an external tangent 3 and another adjacent external tangent 3. These partial arcs 2 are spaced apart from one another, and the number of the partial arcs 2 is six. When a regular n-gon is used instead of the regular hexagon 8, there are n partial arcs 2.
It is preferable that the six partial arcs 2 have the same length. It is also preferable that the partial arcs 2 have the same length as the external tangents 3. As used herein, "the same length" encompasses substantially the same length. In this case, the length between the end of the partial arc 2 and the end of the external tangent 3 becomes relatively large, and each vertex of an inter-blank loss part 13 which will be described later has the shape of a semicircle with a relatively large diameter, or has a linear shape.

Also, when the length of the partial arc 2 is not the same as that of the external tangent 3, it is preferable that the length of the partial arc 2 be longer than that of the external tangent 3. When the partial arc 2 is longer than the external tangent 3, the vertex of the inter-blank loss part 13 has the shape of a semicircle with a small diameter. Hence, problems such as shortened life of the die tool and cutting twice are more likely to occur. Also, since the area of the inter-blank loss part 13 becomes relatively large, the material yield up to this step may slightly decrease.

However, an intermediate cup-shaped product 10 which will be described later will hardly get caught on the tool etc. during the process, so the process is hardly suspended. Further, since protrusions 10a of the intermediate cup-shaped product 10 become small, the area cut in the finishing step becomes very small. As a result, the overall material yield improves compared with the case where the partial arc 2 and the external tangent 3 have the same length.

If the external tangent 3 is longer than the partial arc 2, the shape of the blank becomes close to a regular hexagon rather than the intended basically circular shape. Thus, the same problems as those associated with the use of a regular hexagonal blank to produce a metal can are likely to occur. It is therefore preferable that the length of the external tangent 3 be equal to that of the partial arc 2 or shorter than the partial arc 2.

The lengths of the partial arc 2 and the external tangent 3 are more specifically described with reference to FIG. 11 for convenience sake. In the blank 1, the partial arc 2 and the external tangent 3 have almost the same length. In this case, the distance between the adjacent ends of the partial arc 2 and the external tangent 3 becomes relatively large and the connect line 4 thus becomes long. Hence, the inter-blank loss part 13 and the punched hole thereof have a shape including a vertex 31 that is shaped like a semicircle having a relatively large diameter.

Contrary to this, if the partial arc 2 is longer than the external tangent 3, as the difference in length increases, vertices 31A and 31B shaped like semicircles having smaller diameters are formed, as shown by the two-dot chain line in FIG. 11. In this case, problems such as cutting twice and shortened service life of the die tool are likely to occur. In addition, the area of the inter-blank loss part increases and the material yield also decreases. However, since the area of the intermediate cup-shaped product 10 cut in the finishing step decreases, the overall material yield improves, as described above. There is also an advantage in that the intermediate cup-shaped product does not get caught on the tool etc. during the process and thus the process is not suspended.

Conversely, if the external tangent 3 is longer than the partial arc 2, there is an advantage in that an almost triangular inter-blank loss part having large-diameter semicircular vertices is formed. However, the shape of such a blank becomes close to a regular hexagon rather than the intended basically circular shape of the blank 1 of the invention. As a result, as illustrated in FIG. 9B and FIG. 9C, the intermediate cup-shaped product 57 having large and deep depressed parts 57a on the open edge and the battery can 58 having high protrusions 58a on the open edge are undesirably formed. It is therefore preferable to design the shape of the blank 1 such that the partial arc 2 and the external tangent 3 have almost the same length or the external tangent 3 is shorter than the partial arc 2.

It is also preferable that the partial arc 2 have, at the midpoint, an outwardly projecting part. While the shape of the projecting part is not particularly limited, it is preferably triangular, quadrangular, trapezoidal, semicircular, sectoral, or the like. In this embodiment, since there are six partial arcs 2, there are also six projecting parts. These six projecting parts become the protrusions longitudinally extending from the open edge of the intermediate cup-shaped product and battery can obtained by working the blank 1.

By providing the projecting parts, eighteen protrusions extending from the open edge of the intermediate cup-shaped product in the longitudinal direction of the intermediate cup-shaped product are formed. Among them, twelve protrusions are derived from the connecting parts between the external tangents 3 and the partial arcs 2, and six protrusions are derived from the projecting parts positioned at the center of the partial arcs 2. As the number of the protrusions increases, the lengths of the protrusions decrease commensurately and become uniform. As a result, the strippability of the intermediate cup-shaped product and battery can by the stripper is improved. This prevents the occurrence of problems during the transport to the next step and prevents such problems as chipping, breakage, and cracking of the opening of the intermediate cup-shaped product and the battery can.

In this embodiment, the partial arc 2 is an arc-shaped curve, but it is not limited thereto. For example, it may be a partial line connecting both ends of the partial arc 2. The partial line may also have a projecting part at the midpoint in the same manner as described above.

Each of the connect lines 4 connects an end of one external tangent 3 to the end of the partial arc 2 or partial line that is closest to the end of the one external tangent 3. These connect lines 4 are spaced from one another, and the number of the connect lines 4 is twelve. When a regular n-gon is used instead of the regular hexagon 8, there are 2n connect lines 4. The 2n connect lines 4 preferably have the same length. Also, the connect lines 4 are linear or arc-shaped.

When the connect lines 4 are linear or arc-shaped, the edge of each vertex of the almost triangular inter-blank loss part 13 becomes linear or arc-shaped without becoming sharply pointed. As a result, the vertex of the inter-blank loss part 13 has some width, although slight, in the direction perpendicular to the cutting direction. There is thus no need to provide the die tool for punching out the inter-blank loss part 13 with a sharp-pointed part. Hence, the service life of the die tool does not become shortened due to blade chipping or abrasion. In addition, the inter-blank loss part 13 can be formed so as to have an accurate shape without leaving jagged edges.

Also, even if the hoop material is fed with a slight feeding error and is cut at a position deviating from the external tangent 3 that is the correct cutting line, no problem occurs because the vertex of the inter-blank loss part 13 has some width in the direction perpendicular to the cutting direction. That is, cutting twice, i.e., being thinly sliced while being scraped by the die tool along the cut section of the punched hole of the inter-blank loss part 13, does not occur. Hence, the die tool can have sufficient life. Therefore, the productivity can be dramatically improved.

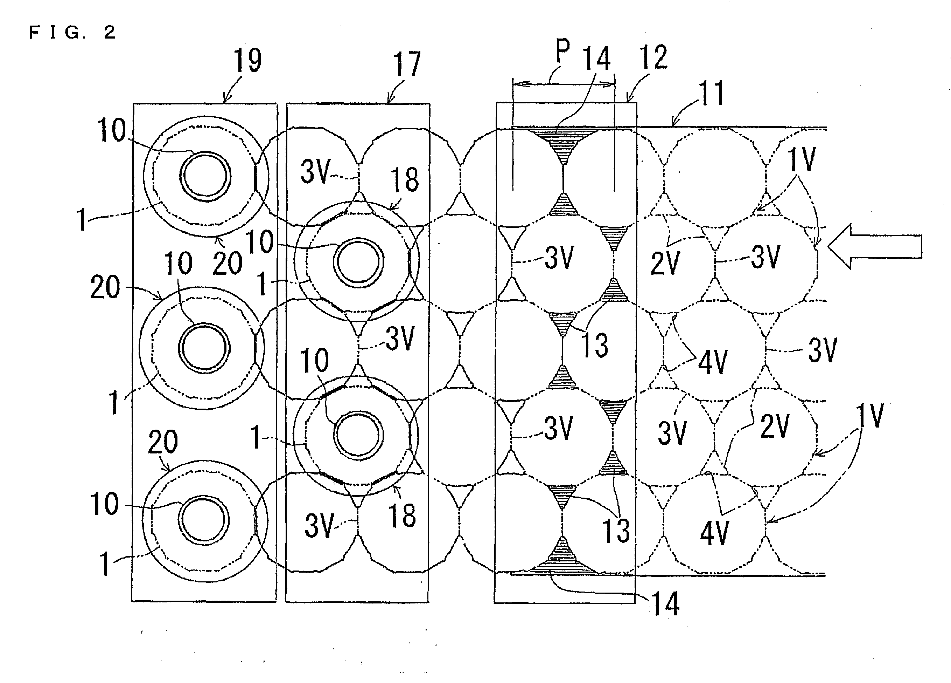

FIG. 2 is a plan view showing a part of a process in the method of producing metal cans according to another embodiment of the invention. As used herein, "a part of a process" refers to a blanking step and a first drawing step. In FIG. 2, from the upstream side toward the downstream side in the transport direction (direction of the arrow) of the hoop material 11, there are provided positions at which the blanks 1 are imaginarily arranged, a loss-part punching mechanism 12, a first blank-punching-drawing mechanism 17, and a second blank-punching-drawing mechanism 19 in this order. Also, in FIG. 2, the loss material parts cut from the hoop material 50 by punching are illustrated as hatching of parallel horizontal lines for convenience sake.

The method of producing metal cans according to the invention includes a blanking step, a first drawing step, a second drawing step, and a finishing step.

The blanking step includes, for example, a blank positioning step, a loss part punching step, and a cutting step. In this step, for example, a long belt-like nickel-plated steel plate of predetermined width is used as the hoop material 11, which is the battery can material. However, this is not to be construed as limiting, and it is possible to use metal plates made of various metal materials for use as metal can materials. The hoop material 11 is intermittently transported at a given feeding pitch P in the direction shown by the arrow.

In the blank positioning step, first, as illustrated in FIG. 2, blank set parts 1V, which are the positions at which the blanks 1 are to be punched out, are imaginarily arranged on the surface of the upstream-side end of the hoop material 11 in the transport direction thereof. The blank set parts 1V are shown by the two-dot chain line in FIG. 2. The blank set parts 1V are staggered, for example, in five parallel rows along the longitudinal direction of the hoop material 11, in such a manner that one blank set part 1V and an adjacent blank set part 1V share one external tangent imaginary line 3V. Thus, one blank set part 1V is adjacent to each of six other blank set parts 1V while sharing one external tangent imaginary line 3V.

Also, at the ends of the hoop material 11 in the width direction thereof, the blank set parts 1V are arranged so that the imaginary line 3V of the external tangent 3 facing the imaginary line 3V of the external tangent 3 that extends in the longitudinal direction of the hoop material to form one side of the inter-blank loss part 13 is positioned near the side edge of the hoop material 11 in the width direction thereof. The feeding pitch P of the hoop material 11 is set to the distance between the centers of two blank set parts 1V that are adjacent in the longitudinal direction of the hoop material 1. The center of the blank set part 1V refers to the center of the circle 7 illustrated in FIG. 1.

In this step, first, based on the imaginary arrangement of the blank set parts 1V, the inter-blank loss parts 13 and the side-edge loss parts 14 are punched out from the hoop material 11 by using the loss-part punching mechanism 12. That is, this step includes an inter-blank loss part punching step and a side-edge loss part punching step. Punching out the inter-blank loss parts 13 leaves punched holes, and punching out the side-edge loss parts 14 leaves openings. In FIG. 2, in order to facilitate understanding, the punched inter-blank loss parts 13 and the punched side-edge loss parts 14 are shown by the horizontal parallel lines. In this way, the loss-part punching mechanism 12 produces the hoop material 11 in which the blank set parts 1V are jointed together with only the external tangent imaginary lines 3V.

In the transport direction of the hoop material 11, the loss-part punching mechanism 12 is disposed downstream of the area where the blank set parts 1V are imaginarily arranged.
The inter-blank loss part is an almost triangular part surrounded by the imaginary lines of three partial arcs of three adjacent metal can blanks each of which faces the other two metal can blanks and the imaginary lines of six connect lines connecting those imaginary lines of three partial arcs. More specifically, the inter-blank loss part 13 is an almost triangular part surrounded by the partial arc imaginary lines 2V of three adjacent blank set parts 1V and the connect line imaginary lines 4V at both ends of the partial arc imaginary lines 2V.

Also, the side-edge loss part 14 is an almost triangular part surrounded by the imaginary lines of two metal can blanks that are adjacent at the end of the hoop material 11 in the width direction thereof and the side edge of the hoop material 11 in the width direction. More specifically, it is an almost triangular part surrounded by the side edge of the hoop material 11, external tangent imaginary lines 3V of two blank set parts 1V that are adjacent in the longitudinal direction of the hoop material 11, partial arc imaginary line 2V, half of another partial arc imaginary lines 2V, and the connect line imaginary lines 4V connecting the above-mentioned external tangent imaginary lines 3V to the above-mentioned partial arc imaginary lines 2V.

It is clear that the area of the loss parts 13 and 14 for obtaining the blanks 1 is significantly reduced compared with the area of the loss parts for obtaining the conventional circular blanks 51 illustrated in FIG. 8A. It is also clear that the area of the loss parts 13 and 14 is equivalent to the area of the loss parts for obtaining the conventional blanks 54 illustrated in FIG. 9A. The blanks 54 are in the shape of an almost regular hexagon having six arc-shaped vertices 54a. This indicates that by designing the shape of the blanks 1, the material yield relative to the hoop material 11 becomes high.

The hoop material 11 with the punched holes corresponding to the inter-blank loss parts 13 and openings corresponding to the side-edge loss parts 14 is transported to the first blank-punching-drawing mechanism 17 and the second blank-punching-drawing mechanism 19, where the remaining operation (cutting) of the loss part punching step and the first drawing step are successively performed.

The first blank-punching-drawing mechanism 17 is equipped with first presses 18. The first presses 18 cut and deep draw the blank set parts 1V in the second and fourth rows in the width direction from one end of the hoop material 11 in the width direction thereof in the imaginary arrangement of the blank set parts 1V illustrated in FIG. 2. The first presses 18 is equipped with a punching die (not shown) for simultaneously cutting five of the six external tangent imaginary lines 3V of one blank set part 1V. In FIG. 2, the positions cut by the punching die are shown by the thick line.

In the blank set part 1V newly fed to the first press 18, since the preceding blank set part 1V in the same row in the transport direction has been already punched out, the external tangent imaginary line 3V shared by the preceding blank set part 1V and the newly fed blank set part 1V has been cut. The newly fed blank set part 1V is thus connected to five blank set parts 1V, excluding the preceding blank set part 1V, with the external tangent imaginary lines 3V. Hence, the blank set part 1V whose position has been adjusted in the first press 18 is punched into the blank 1 when the remaining five external tangent imaginary lines 3V are simultaneously cut. Immediately after the punching, the blank 1 is drawn to form the intermediate cup-shaped product 10.

After the blank 1 is punched out by the first blank-punching-drawing mechanism 17, the hoop material 11 is fed to the second blank-punching-drawing mechanism 19. The second blank-punching-drawing mechanism 19 is equipped with second presses 20. The second presses 20 successively perform the remaining operation of the loss part punching step (cutting) and the first drawing step (deep drawing) on the blank set parts 1V in the first, third and fifth rows in the width direction from one end of the hoop material 11 in the width direction thereof in the imaginary arrangement of the blank set parts 1V illustrated in FIG. 2. That is, they punch and deep draw the blank set parts 1V remaining on the transported hoop material 11.

The second presses 20 is equipped with a punching die (not shown) for cutting the external tangent imaginary lines 3V remaining on the transported blank set parts 1V. The positions cut by the punching die are shown by the thick line. The blank set part 1V whose position has been adjusted in the second press 20 is punched into the blank 1 when the remaining one external tangent imaginary line 3V is cut. Immediately after the punching, the blank 1 is drawn to form the intermediate cup-shaped product 10.

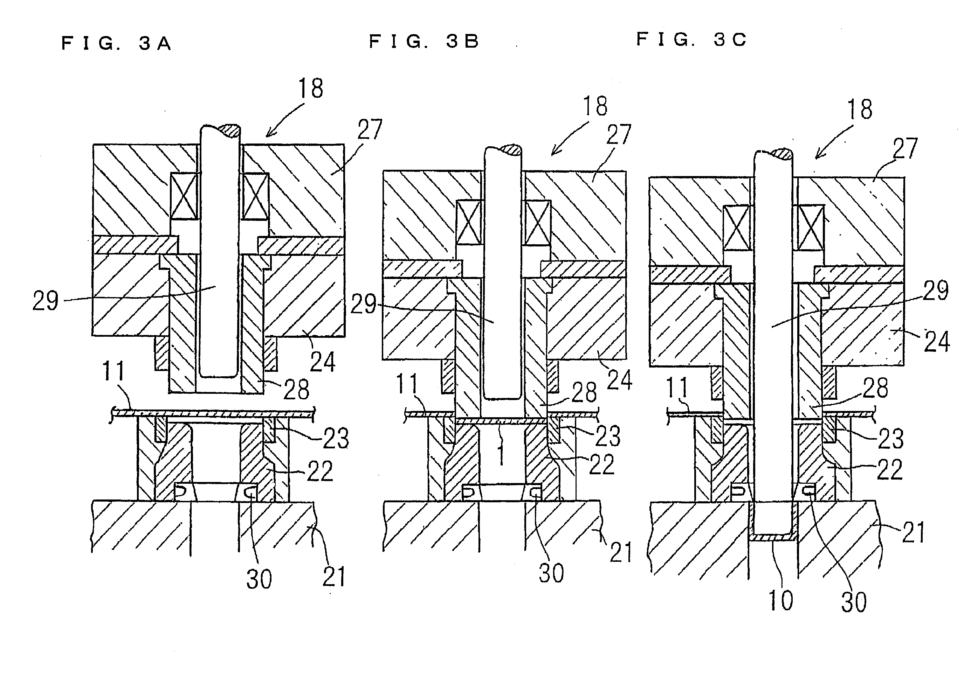

FIG. 3A to FIG. 3C are longitudinal sectional views schematically showing the structure of the first press 18. FIG. 3A illustrates the positioning step of the blank set part 1V. FIG. 3B illustrates the punching step of the blank 1. FIG. 3C illustrates the drawing step of the blank 1.
The first press 18, which includes a die holder 21, a drawing die 22 (drawing die), a blanking die 23, first and second punch holders 24 and 27, a blanking punch 28, a drawing punch 29 (drawing punch), and a stripper 30, punches and draws the blank 1.

The die holder 21 supports the drawing die 22. The blanking die 23 is fixed around the outer open edge of the drawing die 22 in a protruded state. The blanking die 23 has a blade for cutting the external tangent imaginary line 3V of the blank set part 1V. This blade is provided at five locations along the edge of the regular hexagonal hole shape in the blanking die 23. The blanking punch 28 also has a blade for cutting the external tangent imaginary line 3V of the blank set part 1V. This blade is provided at five locations along the edge of the tip of the blanking punch 28 having a regular hexagonal cross-sectional shape.

In the step illustrated in FIG. 3A, the hoop material 11 is intermittently transported onto the upper end face of the blanking die 23, and the position of the blank set part 1V is set to a predetermined position.

In the step illustrated in FIG. 3B, after the positioning of the blank set part 1V, the blanking punch 28 and the drawing punch 29 (drawing punch) held in the first and second punch holders 24 and 27, respectively, move toward the dies 22 and 23. Then, the blades (not shown) of the blanking die 23 and the blades (not shown) of the blanking punch 28 simultaneously cut the five external tangent imaginary lines 3V remaining in the hoop material 11, so that the blank 1 is punched out from the blank set part 1V. The punched blank 1 is temporarily held between the blanking punch 28 and the drawing die 22.

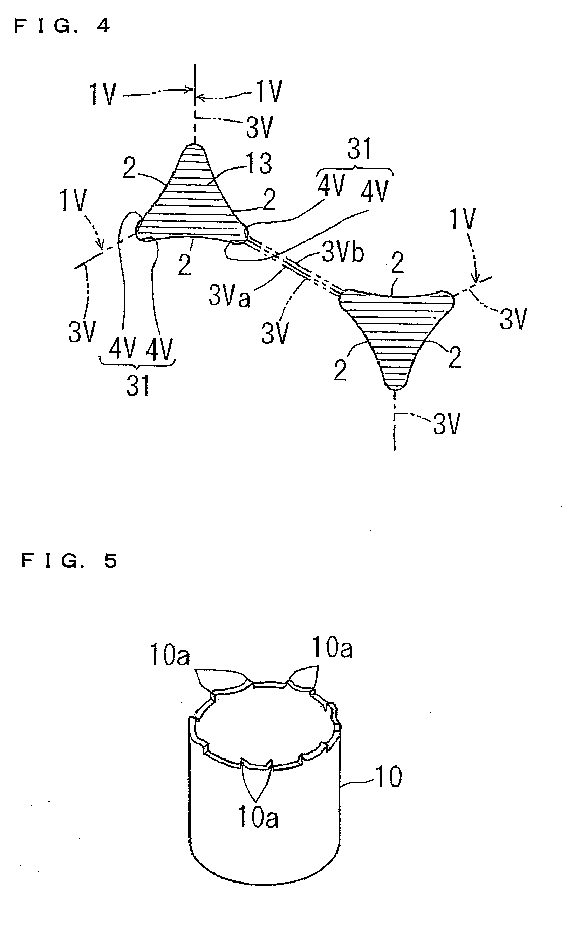

In the step illustrated in FIG. 3C, the blank 1 sandwiched between the blanking punch 28 and the drawing die 22 is rammed by the cylindrical drawing punch 29. This causes the blank 1 to be pushed into the drawing die 22 and drawn to a shape conforming to the circular cross-sectional shape of the drawing punch 29. As a result, the cylindrical intermediate cup-shaped product 10 with a bottom illustrated in FIG. 5 can be obtained. FIG. 5 is a perspective view showing the appearance of the intermediate cup-shaped product 10.

When the drawing punch 29 and the blanking punch 28 move upward, the intermediate cup-shaped product 10 is seized and stopped by the stripper 30 with springs, so that only the drawing punch 29 and the blanking punch 28 return to the original positions illustrated in FIG. 3A. This operation is repeated. The second presses 20 in FIG. 2 have the same structure as that of the first presses 18 except that the blade is provided only at one location of each of the blanking die 23 and the blanking punch 28. Also, it is preferable to form the intermediate cup-shaped product 10 by performing a two-stage drawing process to obtain a first intermediate cup-shaped product 10 and a second intermediate cup-shaped product 10 in this order, since the distortion due to the process is further reduced.

FIG. 4 is an enlarged plan view of a part of the imaginary arrangement of the blank set parts 1V on the hoop material 11. Specifically, FIG. 4 illustrates the inter-blank loss parts 13 and the vicinity thereof. In FIG. 4, in order to clearly show the inter-blank loss parts 13, they are illustrated as hatching of horizontal parallel lines for convenience sake. Based on FIG. 4, the step of FIG. 3A, i.e., the step of punching the blank 1 by using the blanking die 23 and the blanking punch 28 is more specifically described.

The inter-blank loss part 13 and the punched hole thereof have an almost triangular outer shape. Also, the three vertices 31 of the punched hole are formed by opposing partial arc imaginary lines 4V of adjacent two blank set parts 1V, and their shape is almost semicircular. Thus, the inter-blank loss part 13 can be punched out by using die tools that are equipped with blades having no sharp-pointed part. As a result, blade chipping or abrasion is unlikely to occur, and the service life of the die tools is not shortened. Also, the inter-blank loss part 13 can be punched into an accurate shape in a reliable manner, and the punched hole is not left with jagged edges or the like.

Contrary to this, the die tools for punching the blank 54 illustrated in FIG. 9A need blades having sharp-pointed parts. Since sharp-pointed parts are susceptible to chipping or abrasion, the service life of the die tools is shortened and the punched hole tends to be left with jagged edges.

Also, after these inter-blank loss parts 13 are punched out, cutting is made along the external tangent imaginary lines 3V. At each end of the external tangent imaginary line 3V is the vertex 31 of punched hole of the inter-blank loss part 13. The vertex 31 is in the shape of a semicircle having a relatively large diameter, and the length (width) in the direction perpendicular to the external tangent imaginary line 3V increases as the distance from the end of the external tangent imaginary line 3V increases. Thus, even if the hoop material 11 is fed with a slight feeding error and is cut along a cutting line 3Va or 3Vb deviating from the correct external tangent imaginary line 3V, for example, cutting twice is highly unlikely to occur, i.e., the cut section of the punched hole is highly unlikely to be sliced thinly by the die tool.

Cutting twice damages the blank 1, adversely affects the quality of the finally obtained battery can, and shortens the service life of the die tools such as the blanking punch 28 and the blanking die 23 illustrated in FIG. 3. Also, cutting twice produces metal pieces, which adhere to the blank, so that the finally obtained metal can may have flaws, scratch marks, deformation, etc. That is, a large advantage of the invention is that cutting twice does not occur, and it is therefore possible to prevent the service life of the die tools from being shortened, improve productivity, and heighten the quality of the metal can. Further, as shown in FIG. 11, the punched blank 1 is not left with jagged edges.

Also, the intermediate cup-shaped product 10 obtained by the above-described forming process is formed by drawing the blank 1 that is almost circular. Thus, as illustrated in FIG. 5, the open edge has wavy protrusions 10a. These protrusions 10a have grown from the connecting parts between the partial arcs 2 and the external tangents 3 of the blank 1 by the connect lines 4. In the intermediate cup-shaped product 10, the number of the protrusions formed is 12, which is twice six, which is the number of the protrusions of the intermediate cup-shaped product formed from a regular hexagonal blank. Since the protrusions 10a are relatively small, they are less influenced by uneven material ductility. The twelve protrusions 10a thus become small and have almost the same length.

Thus, when this intermediate cup-shaped product 10 is detached from the drawing punch 29 of the press 18 illustrated in FIG. 3, the twelve protrusions 10a can evenly contact the stripper 30. Hence, the intermediate cup-shaped product 10 can be smoothly detached without slanting. Further, when the intermediate cup-shaped product 10 is transported to the next step, namely, the second drawing step, which will be described later, the protrusions 10a do not damage such tools as the feeding pawl and drawing die due to a contact with these tools.

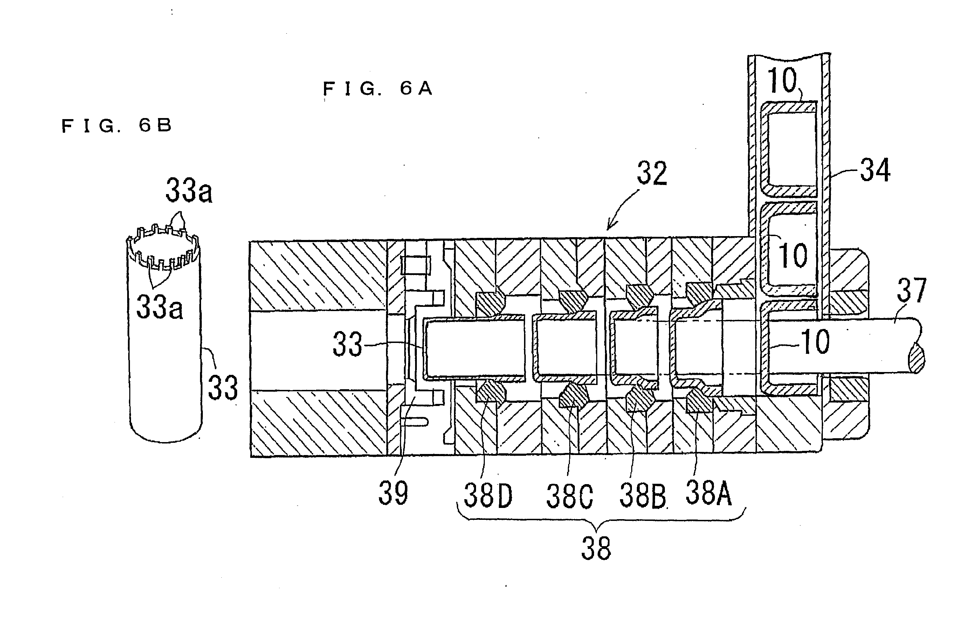

In the second drawing step, the intermediate cup-shaped product 10 obtained by the first drawing step is drawn, preferably drawn and ironed, to obtain a battery can 33. FIG. 6A and FIG. 6B are drawings showing a part of a process in the method for producing metal cans in another embodiment of the invention. FIG. 6A is a longitudinal sectional view schematically showing the structure of a drawing and ironing machine 32. FIG. 6B is a perspective view showing the appearance of the battery can 33 obtained by the second drawing step. FIG. 6 specifically illustrates the second drawing step.

The intermediate cup-shaped product 10 is drawn and ironed by the drawing and ironing machine 32. In this DI process, one drawing operation and three ironing operations are continuously performed at one time. This produces the cylindrical battery can 33 with a bottom illustrated in FIG. 6B.
The drawing and ironing machine 32 includes an intermediate product feeder 34, a DI punch 37, a die mechanism 38, and a stripper 39.

The intermediate product feeder 34 successively transports the intermediate cup-shaped product 10 to a forming area. The DI punch 37 is driven by a flywheel (not shown), and pushes the intermediate cup-shaped product 10 whose position has been adjusted in the forming area toward a drawing die 38A of the die mechanism 38. The die mechanism 38 is sequentially provided with the drawing die 38A, and first to third ironing dies 38B, 38C, and 38D. These dies 38A to 38D are arranged in series so as to be concentric with the axis of the DI punch 37. The second ironing die C has an ironing hole whose the diameter is smaller than that of the ironing hole of the first ironing die 38B. The third ironing die 38D has an ironing hole whose the diameter is smaller than that of the ironing hole of the second ironing die C. The stripper 39 detaches the battery can 33 from the drawing and ironing machine 32.

The intermediate cup-shaped product 10 is transported to the forming area by the intermediate product feeder 34, positioned, and then punched by the DI punch 37.
As a result, the inner face thereof is drawn to a shape corresponding to the shape of the outer face of the DI punch 37 by the drawing die 38A. That is, the intermediate cup-shaped product 10 is drawn to an internal diameter almost the same as the internal diameter of the battery can 33 that is the final product.

After the passage through the drawing die 38A, due to the punching of the DI punch 37, the intermediate cup-shaped product 10 is subjected to a first ironing operation by the first ironing die 38B. As a result, the circumferential wall is stretched and its thickness is reduced, and in addition, its hardness is enhanced due to work hardening. After the passage through the first ironing die 38B, due to further punching of the DI punch 37, the cup-shaped product 10 is sequentially subjected to a second ironing operation and a third ironing operation by the second ironing die 38C and then the third ironing die 38D. As a result, the circumferential wall is gradually stretched and its thickness is reduced, and in addition, its hardness is enhanced due to work hardening. Upon completion of the passage of the cup-shaped product 10 through the third ironing die 38D, the cylindrical battery can 33 of the desired shape having a bottom can be obtained. The battery can 33 is detached from the drawing and ironing machine 32 by the stripper 39.

The open edge of the battery can 33 has protrusions 33a, which are the protrusions 10a of the intermediate cup-shaped product 10 slightly stretched due to the ironing. However, the protrusions 33a have smaller dimensions (length × width) than those of the protrusions 58a of the battery can 58 illustrated in FIG. 9C. This is because the dimensions (length × width) of the protrusions 10a from which the protrusions 33a are formed are smaller than those of the protrusions of the intermediate cup-shaped product of the battery can 58, and the number of the protrusions 33a formed is twelve, which is twice six in the case of the battery can 58.

Thus, when the open edge of the battery can 33 is trimmed by cutting, less material is lost. Due to the less loss in the finishing step, the material cost of the battery can 33 according to the production method of the invention is reduced compared with the can produced from the blank 54, although the material yield of the blank 1 is almost the same as that of the conventional blank 54 of FIG. 9A to FIG. 9C.

Also, the number of the protrusions 33a is as many as twelve, and their lengths (length in the longitudinal direction of the battery can 33) become almost the same without large variation. Hence, when the battery can 33 is detached from the DI punch 37 by the stripper 39, the protrusions 33a evenly contact the stripper 39 with good balance. As a result, the battery can 33 can be smoothly detached from the DI punch 37 without slanting or the like.

Contrary to this, according to the conventional production method illustrated in FIG. 9A to FIG. 9C, the number of the protrusions 58a formed on the open edge of the battery can 58 is as few as six, their heights are large, and their heights are varied. Thus, when the battery can 58 is detached from the DI punch, the protrusions 58a contact the stripper in an unbalanced manner, thereby resulting in bending or breakage of the protrusions 58a, cracking or breakage of the depressed parts 58b, etc. The broken metal pieces can cause damage to the battery can 58 or cause a can jam, resulting in a poor product yield.

In this embodiment, a part of the punching step is performed by the loss-part punching mechanism 12, the remaining operation (cutting) of the punching step and the first drawing step are performed by the first blank-punching-drawing mechanism 17 and the second blank-punching-drawing mechanism 19, and the second drawing step is performed by the drawing and ironing machine 32.

### [Finishing step]

In this step, the twelve protrusions 33a formed on the open edge of the battery can 33 obtained in the previous step are cut and removed such that the battery can 33 have a predetermined flat open end face and predetermined dimensions, in order to obtain a finished product of the battery can.

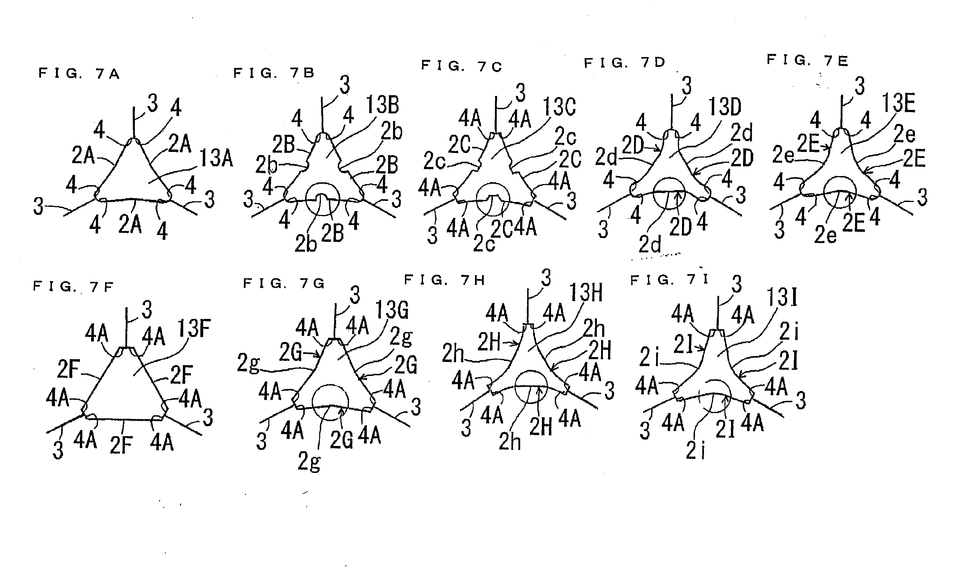

FIG. 7A to FIG. 7I are plan views showing the shapes of inter-blank loss parts 13A to 13I in different embodiments. The inter-blank loss parts 13A to 13I have an almost triangular outer shape in the same manner as the inter-blank loss part 13, except that the shapes of partial arcs or partial lines 2A to 2I and connect lines 4 and 4A are different. Each of the external tangents 3 is a straight line of predetermined length.

The inter-blank loss part 13A illustrated in FIG. 7A has the same structure as the inter-blank loss part 13 except that it includes the partial lines 2A instead of the partial arcs 2. The inter-blank loss part 13A has three vertices that are almost triangular, and each vertex has a semicircular shape formed by two partial lines 2A and two connect lines 4. Each partial line 2A is a bent line consisting of two straight lines that are connected at the central part of the bent line, with the connected part protruding toward the inner side of the inter-blank loss part 13A. That is, the partial line 2A has a projecting part at the central part thereof.

The inter-blank loss part 13B illustrated in FIG. 7B has the same structure as the inter-blank loss part 13 except that it includes the partial lines 2B instead of the partial arcs 2. The inter-blank loss part 13B has three vertices that are almost triangular, and each vertex has a semicircular shape formed by two partial lines 2B and two connect lines 4. Each partial line 2B is also bent in the same manner as the partial line 2A, but has a semicircular projecting part 2b at the central part thereof. In other words, the shape of the partial line 2B is such that two straight lines are connected by the small semicircular projecting part 2b at the central part thereof. The projecting part 2b protrudes toward the inner side of the inter-blank loss part 13B.

The inter-blank loss part 13C illustrated in FIG. 7C has the same structure as the inter-blank loss part 13 except that it includes the partial lines 2C instead of the partial arcs 2. The inter-blank loss part 13C has three vertices that are almost triangular, and each vertex has a semicircular shape formed by two partial lines 2C and two connect lines 4. Each partial line 2C is also bent in the same manner as the partial line 2A, but has a trapezoidal projecting part 2c at the central part thereof. In other words, the shape of the partial line 2C is such that two straight lines are connected by the small semi-trapezoidal projecting part 2c at the central part thereof. The projecting part 2c protrudes toward the inner side of the inter-blank loss part 13C.

The inter-blank loss part 13D illustrated in FIG. 7D has the same structure as the inter-blank loss part 13 except that it includes the partial lines 2d instead of the partial arcs 2. The inter-blank loss part 13D has three vertices that are almost triangular, and each vertex has a semicircular shape formed by two partial lines 2d and two connect lines 4. The shape of each partial line 2d is such that the central part is a straight line and both ends of the straight line are connected to the connect lines 4 by arc-shaped curves. In other words, the partial line 2d is composed of the central straight line both ends of which are extended to the connect lines 4 via the arc-shaped parts. The partial line 2d as a whole protrudes toward the inner side of the inter-blank loss part 13D.

The inter-blank loss part 13E illustrated in FIG. 7E has the same structure as the inter-blank loss part 13 except that it includes the partial lines 2e instead of the partial arcs 2. The inter-blank loss part 13E has three vertices that are almost triangular, and each vertex has a semicircular shape formed by two partial lines 2e and two connect lines 4. The shape of each partial line 2e is such that the central part is an arc-shaped curve and both ends of this curve are connected to the connect lines 4 by straight lines. In other words, the partial line 2e is composed of the central arc-shaped part both ends of which are extended to the connect line 4 via the straight line parts. The partial line 2e as a whole protrudes toward the inner side of the inter-blank loss part 13E.

The inter-blank loss part 13F illustrated in FIG. 7F has the same structure as the inter-blank loss part 13 except that it includes the partial lines 2F instead of the partial arcs 2 and includes the connect lines 4A instead of the connect lines 4. The inter-blank loss part 13F has three vertices that are almost triangular, and each vertex has a trapezoidal shape formed by two partial lines 2F and two connect lines 4A. Each of the partial lines 2F and the connect lines 4A is a straight line.

The inter-blank loss part 13G illustrated in FIG. 7G has the same structure as the inter-blank loss part 13 except that it includes the partial lines 2G instead of the partial arcs 2 and includes the connect lines 4A instead of the connect lines 4. The inter-blank loss part 13G has three vertices that are almost triangular, and each vertex has a trapezoidal shape formed by two partial lines 2G and two connect lines 4A. Each partial line G is a bent line in the same manner as the partial line 2A of the inter-blank loss part 13A in FIG. 7A. The partial line 2G as a whole protrudes toward the inner side of the inter-blank loss part 13G. Each connect line 4A is a straight line.

The inter-blank loss part 13H illustrated in FIG. 7H has the same structure as the inter-blank loss part 13 except that it includes the partial lines 2H instead of the partial arcs 2 and includes the connect lines 4A instead of the connect lines 4. The inter-blank loss part 13H has three vertices that are almost triangular, and each vertex has a trapezoidal shape formed by two partial lines 2H and two connect lines 4A. Each partial line H is a line similar to the partial line 2D of the inter-blank loss part 13D in FIG. 7D. The partial line 2H as a whole protrudes toward the inner side of the inter-blank loss part 13H. Each connect line 4A is a straight line.

The inter-blank loss part 13I illustrated in FIG. 7I has the same structure as the inter-blank loss part 13 except that it includes the partial lines 2I instead of the partial arcs 2 and includes the connect lines 4A instead of the connect lines 4. The inter-blank loss part 13I has three vertices that are almost triangular, and each vertex has a trapezoidal shape formed by two partial lines 2I and two connect lines 4A. Each partial line 2I is a line similar to the partial line 2E of the inter-blank loss part 13E in FIG. 7E. The partial line 2I as a whole protrudes toward the inner side of the inter-blank loss part 13I. Each connect line 4A is a straight line.

The inter-blank loss parts 13A to 13I have an almost triangular shape, and the tip of each of the three vertices thereof is semicircular or linear. Thus, unlike the case where the tip of the vertex has a sharp-pointed shape, the die tools for punching the inter-blank loss parts 13A to 13I are not susceptible to chipping or abrasion. The service life of the die tools is thus not shortened, and the die tools can be used without any trouble during the service life. Also, when the inter-blank loss parts 13A to 13I are punched out and the part between the opposing vertices of two adjacent punched holes is cut, problems such as cutting twice do not occur in the cutting step, since the tips of the vertices are semicircular or linear. The die tools are thus not susceptible to chipping, abrasion or the like, and the predetermined service life can be secured.

In the inter-blank loss part 13B or 13C, the partial line 2B or 2C has the projecting part 2b or 2c at the central part thereof. In the inter-blank loss part 13D, 13E, 13G, 13H, or 13I, the partial line 2D, 2E, 2G, 2H, or 2I as a whole forms the projecting part 2d, 2e, 2g, 2h, or 2i. By providing these projecting parts, the number of the protrusions formed on the open edge of the intermediate cup-shaped product 10 becomes 18, the lengths of the protrusions are further shortened, and the lengths of the protrusions become more uniform. This permits a further improvement in the strippability of the intermediate cup-shaped product 10 and the battery can 33 by the strippers 30 and 39. Also, during the transport to the next step, it is also possible to further prevent the transport or other tools from having problems. It is also possible to further prevent the open edge of the intermediate cup-shaped product 10 and the battery can 33 from having problems such as chipping, breakage, or cracking.

In this embodiment, the production of the battery cans 33 has been described, but this is not to be construed as limiting. The production method of the invention is applicable to the production of, for example, cylindrical metal cans with bottoms for beverages. In this case, it is also possible to produce high quality metal cans with high productivity and in a preferable manner while reducing the material costs, in the same manner as described in this embodiment.

### Industrial Applicability

The blank for a metal can according to the invention and the production method of metal cans using the same are applicable to the production of cylindrical metal cans with bottoms. Cylindrical metal cans with bottoms are used, for example, in the fields of food, beverages, quasi-drug, transport devices, batteries or the like.

## Claims

1. A blank for a metal can, the blank having a shape that is surrounded by:
n external tangents to a circle about which a regular n-gon is circumscribed, the midpoint of each of the n external tangents being a point of contact between each of the n sides of the regular n-gon and the circle, each of the n external tangents shorter than one side of the regular n-gon;
at least one selected from: n partial arcs of the circle each positioned between the adjacent external tangents in the circumferential direction of the circle; and n partial lines each connecting both ends of each of the partial arcs; and
2n linear or arc-shaped connect lines each connecting an end of each of the external tangents with the most adjacent end of each of the partial arcs or partial lines.

2. The blank for a metal can in accordance with claim 1, wherein the n external tangents have the same length, the n partial arcs or partial lines have the same length, and the 2n connect lines have the same length.

3. The blank for a metal can in accordance with claim 1 or 2, wherein the length of the external tangents is equal to the length of the partial arcs or partial lines or shorter than the length of the partial arcs or partial lines.

4. The blank for a metal can in accordance with claim 1 or 2, wherein the length of each of the external tangents is 16% to 60% of the length of one side of the regular n-gon.

5. The blank for a metal can in accordance with any one of claims 1 to 4, wherein each of the partial arcs or partial lines has, at its midpoint, an outwardly projecting part.

6. The blank for a metal can in accordance with claim 5, wherein the projecting part is triangular, quadrangular, trapezoidal, semicircular, or sectoral.

7. The blank for a metal can in accordance with any one of claims 1 to 6, wherein the regular n-gon is a regular hexagon or regular octagon.

8. The blank for a metal can in accordance with any one of claims 1 to 7, wherein the metal can is a battery can.

9. A method for producing metal cans, comprising:
a blanking step of punching and cutting a hoop material to obtain the metal can blanks of any one of claims 1 to 8;
a first drawing step of drawing each of the metal can blanks to obtain a cylindrical intermediate cup-shaped product with a bottom;
a second drawing step of drawing the intermediate cup-shaped product to obtain a cylindrical metal can with a bottom; and
a finishing step of trimming an open edge of the metal can to obtain a finished product of the metal can with a flat open end face.

10. The method for producing metal cans in accordance with claim 9, wherein the blanking step comprises:
a blank positioning step of setting imaginary lines for staggering the metal can blanks of any one of claims 1 to 8 on a surface of the hoop material in such a manner that the adjacent metal can blanks share one of the external tangents;
a loss part punching step including a step of punching inter-blank loss parts and a step of punching side-edge loss parts to form punched holes and openings in the hoop material; and
a cutting step of cutting the hoop material between the opposing vertices of the adjacent punched holes and between the opposing vertices of the punched holes and the openings along the imaginary lines of the external tangents.

11. The method for producing metal cans in accordance with claim 10, wherein the blank positioning step is a step of setting the imaginary lines for staggering the metal can blanks in such a manner that in each of the metal can blanks arranged at the ends of the hoop material in the width direction thereof, the external tangent facing the external tangent that forms the inter-blank loss part is positioned near the side edge of the hoop material in the width direction thereof.

12. The method for producing metal cans in accordance with claim 10 or 11, wherein the step of punching inter-blank loss parts is a step of punching inter-blank loss parts to form punched holes in the hoop material, each of the inter-blank loss parts being surrounded by the imaginary lines of three partial arcs of three adjacent metal can blanks each facing the other two metal can blanks and the imaginary lines of six connect lines connecting the imaginary lines of the three partial arcs.

13. The method for producing metal cans in accordance with any one of claims 10 to 12, wherein the step of punching side-edge loss parts is a step of punching side-edge loss parts to form openings in the hoop material, each of the side-edge loss parts being surrounded by the imaginary lines of two metal can blanks adjacent at the ends of the hoop material in the width direction thereof and the side edge of the hoop material in the width direction thereof.

14. The method for producing metal cans in accordance with any one of claims 9 to 13, wherein the metal cans are battery cans.
